Europäisches Patentamt

(19) European Patent Office

Office européen des brevets

(11) Publication number: **0 010 380**

A1

(12) # EUROPEAN PATENT APPLICATION

(21) Application number: **79302105.6**

(22) Date of filing: **04.10.79**

(51) Int. Cl.³: **B 60 K 28/00**
**B 60 K 41/26**

(30) Priority: **04.10.78 DE 2843161**

(43) Date of publication of application:
**30.04.80 Bulletin 80/9**

(84) Designated Contracting States:
**BE FR GB IT**

(71) Applicant: MASSEY-FERGUSON SERVICES N.V.
Abraham de Veerstraat 7A
Curacao Netherlands Antilles(NL)

(72) Inventor: Gehrke, Fritz
Huelsebrinkstrasse 7
D-3015 Wennigsen(DE)

(72) Inventor: Jansen, Heinrich
Sohlweg 33
D-3014 Laatzen 5(DE)

(74) Representative: Jones, D. Bryn et al,
Patent and Trade Marks Department Massey-Ferguson
Stareton, near Kenilworth Warwickshire CV8 2LJ(GB)

(54) **Vehicle with transmission interlock.**

(57) A transmission control lever is movable from a no-drive position (III) to a number of drive positions (VI, VII, RI, RII) and a braking system (9, 10, 11, 12, 13, 14, 15, 16, 63, 64, 66) is provided for braking the ground engaging means. A starting circuit (17, 18, 19, 20, 21, 21a) is also provided which includes a starter (17) and an ignition switch (21) which must be moved to a start position (ST) when it is desired to energize the starter and which occupies a running position (RUN) when the prime mover is running. An interlock system (74, 75, 67, 62, 66, 23, 24) is included which ensures that with the switch (21) in the start position, the starter (17) can only be operated when the transmission control lever is in the no-drive position and, with the switch (21) in its start or running position, the transmssion control lever cannot be moved from its no-drive position to any of its drive positions until the braking system is operative.

EP 0 010 380 A1

./...

Croydon Printing Company Ltd.

FIG. 2

1

# Vehicle with Transmission Interlock

## Background of the Invention

This invention relates to the control of transmissions, and particularly, though not exclusively, to the control of transmissions in heavy construction machines, such as excavators or the like, in which the transmission comprises a mechanical transmission element in series with a hydraulic transmission element. In particular the invention is concern -ed with controlling the starting process so that the vehicle remains under control during starting and immediately thereafter.

## Summary of the Invention

According to the present invention there is provided a vehicle having a prime mover, ground engaging means by which said vehicle can be moved over the ground, a transmission connecting said prime mover to said ground engaging means, transmission control means means movable from a no-drive position to a number of drive positions, a braking system for braking said ground engaging means, a prime mover starting circuit including a prime mover starting means and switch means which must be moved to a start position when it is desired to energize said starting means and which occupies a running position when said prime mover is running following starting, and an interlock system connecting both said starting circuit and said braking system to said control means to ensure that:-

    i) with said switch means in said start position said starting circuit is only operative to energize said starting means when said control means is in said no-drive position, and

    ii) with said switch means in said start or said running position said control means cannot be moved from said no-drive position to any one of said drive positions until said braking system is operative to brake said ground engaging means.

As will be appreciated a vehicle fitted with the interlock system of the present invention is particularly safe since it cannot be started except when the transmission is in a no-drive condition and further the transmission control means cannot be moved to select a drive condition until the braking system is shown to be operative. This latter feature is particularly important when the braking system is fluid pressure operated since it prevents the operator driving the vehicle until the braking system has come up to pressure following starting. In a vehicle having a fluid pressure operated braking system a braking system pressure level sensing means is included in the interlock system to ensure that with said switch means in said start or said running position the control means cannot be moved from said no-drive position to any one of said drive positions until said braking system pressure has reached a predetermined level at which said braking system is operative to brake said ground engaging means.

In order to allow starting should the prime mover be stopped in a drive condition a further electrical circuit may be provided to partially override said interlock system to enable said control means to be moved from any one of

3

said drive positions to said no-drive position when said prime mover is not operative. Preferably the further circuit includes an override position of said switch means said further circuit being arranged to be brought into operation to partially override said interlock system when said switch means is in said override position.

As will be appreciated this partial override can be achieved in other ways and could be non-electrical.

Preferably the interlock system is arranged to ensure that the braking system is activated to brake said ground engaging means whenever said transmission control means is in said no-drive position and is de-activated whenever said control member is moved to any one of said drive positions. This is a further safety feature when the vehicle is an excavator since it ensures that whenever the no-drive position is selected, as will happen whenever the excavator is digging on site, the brakes are automatically fully applied.

When the transmission comprises a mechanical transmission element having a number of selectively engageable ratios and a hydraulic transmission element in series with said mechanical transmission element, both said elements are preferably controlled by a single control means in the form of a lever movable in two planes at right angles, movement in one plane controlling the mechanical transmission element and movement in the other plane controlling the hydraulic transmission element.

## Brief Description of the Drawings

One embodiment of the present invention will now be described by way of example only, with reference to the accompanying drawings in which:-

Figure 1 is a diagrammatic representation of the transmission layout of a wheeled vehicle such as an excavator;

Figure 2 is a diagrammatic representation of the braking system, transmission selection system and interlock system of the invention applied to the vehicle of Figure 1;

Figure 3 shows a side view of part of the transmission selection and control mechanism of the invention;

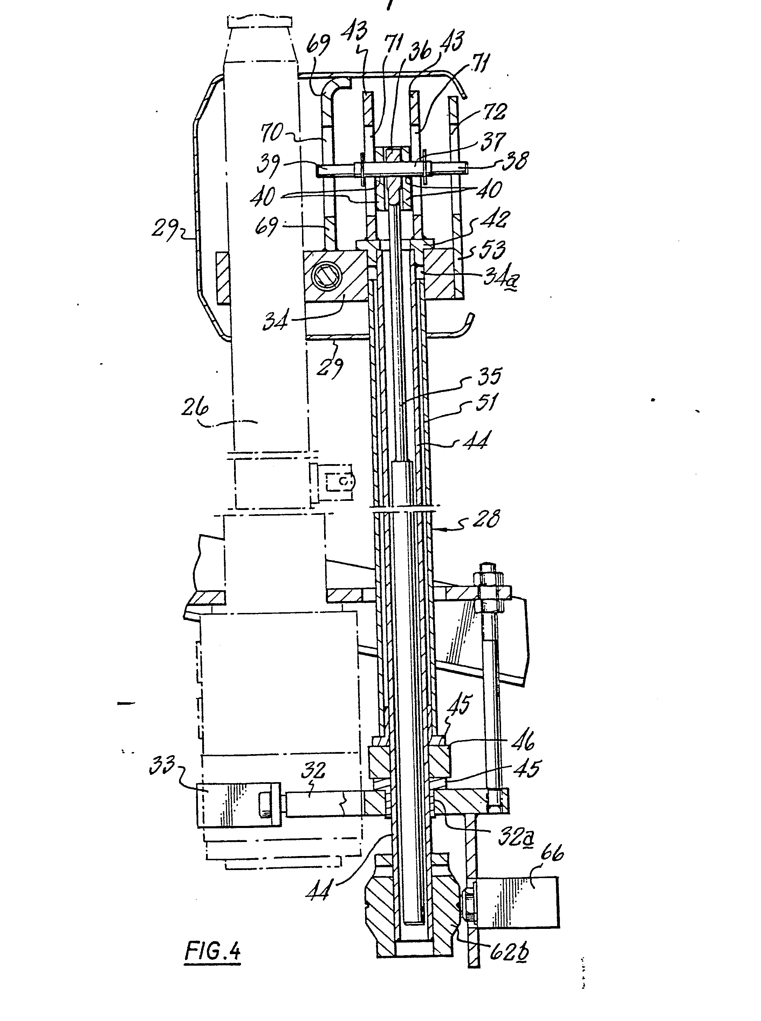

Figure 4 is a longitudinal section through Figure 3;

Figure 6 is a view in the direction of arrow X of Figure 3; and

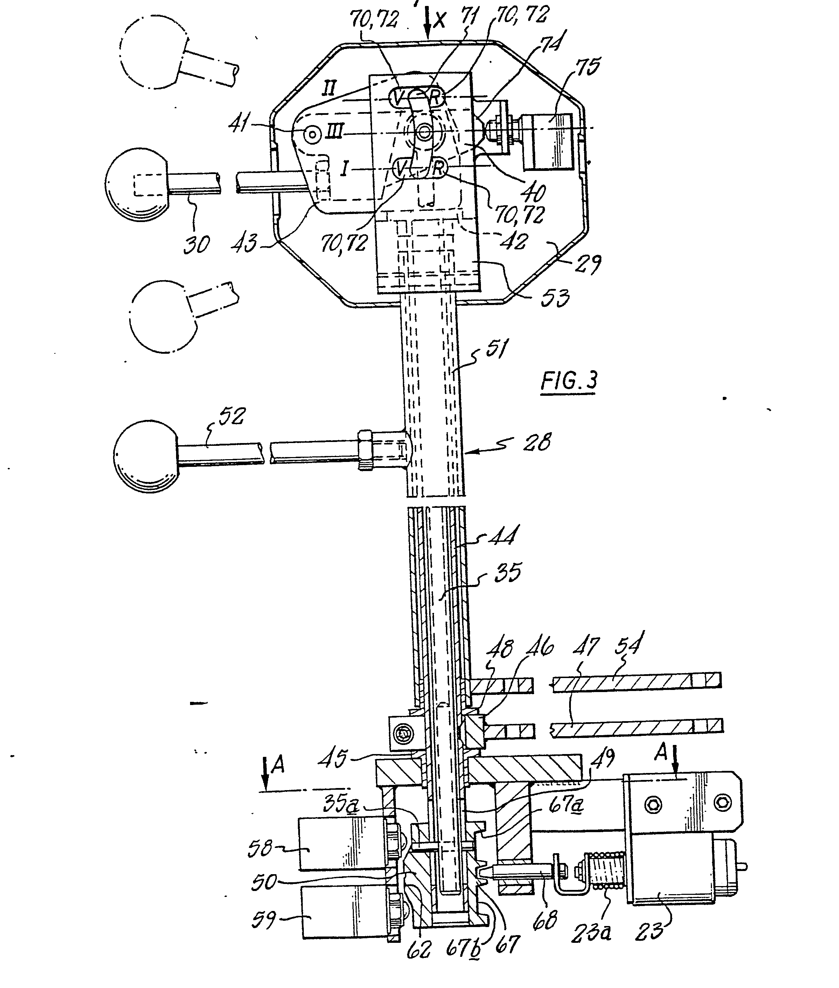

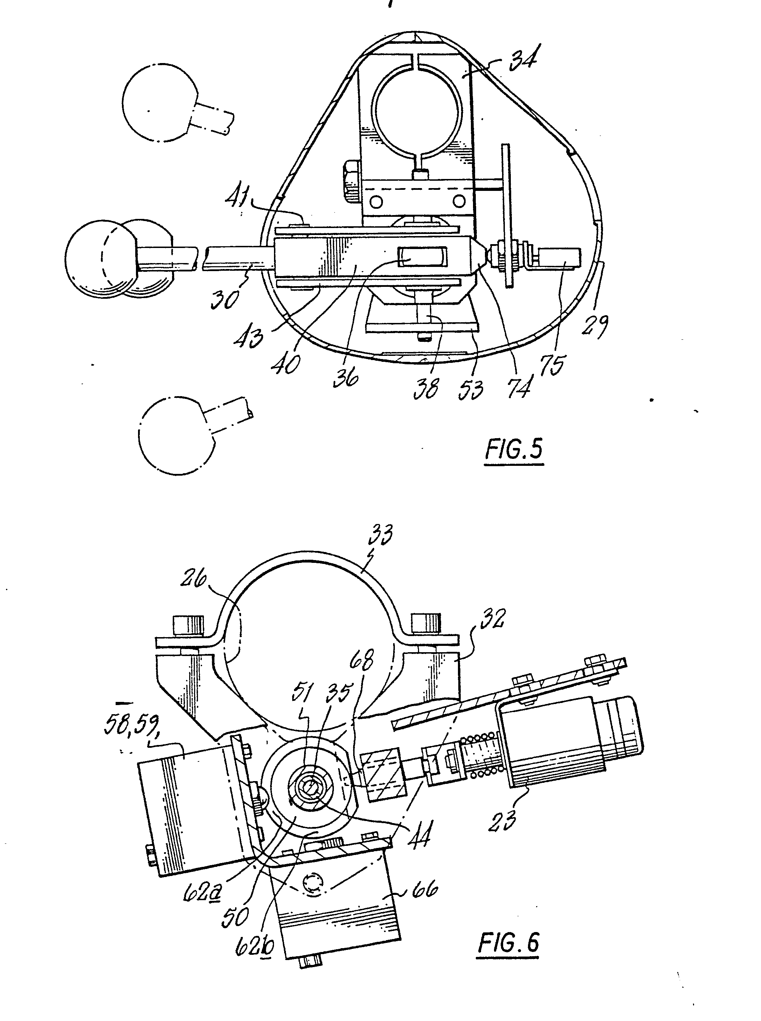

Figure 6 is a section on the line A-A of Figure 3.

Description of Preferred Embodiment

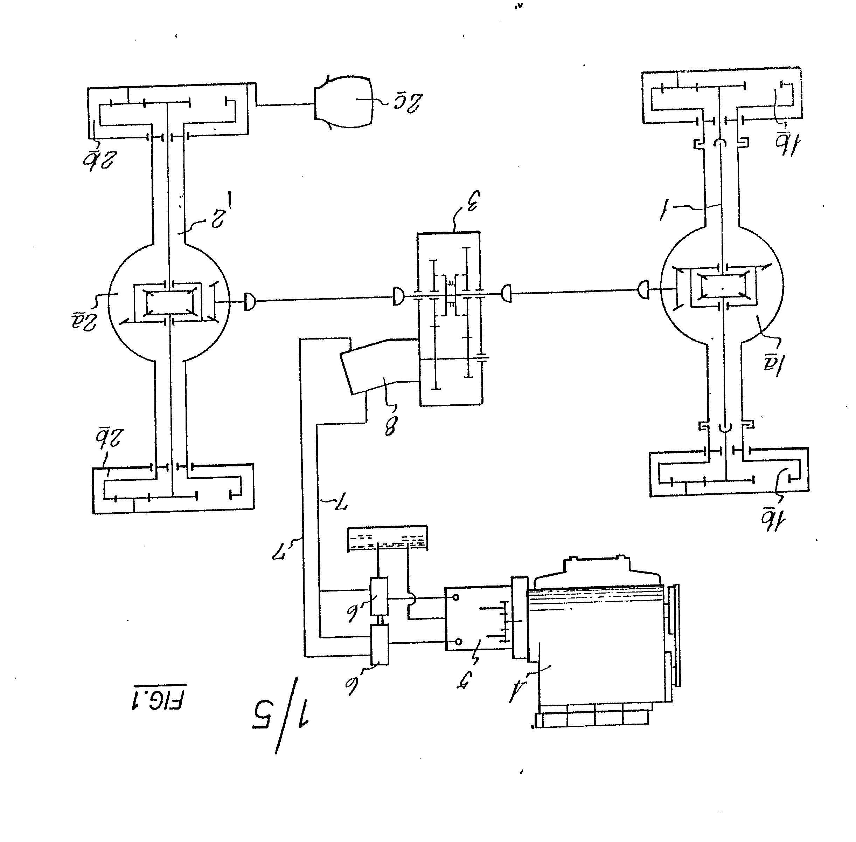

Referring to Figure 1 the vehicle has an internal combustion engine 4 which drives a hydraulic transmission in the form of an hydraulic pump 5 which is connected with an hydraulic motor 8 by hydraulic pipes 7 via control unit 6. Motor 8 drives a mechanical change speed gearbox 3 which provides a number of discrete ratios, for example a road ratio and a cross-country ratio. Gearbox 3 in turn drives a front steering axle 1 and a rigid rear axle 2 both of which support ground engaging means in the form of wheels (one of which is indicated by detail 2c) which are driven via differentails 1a and 2a and reduction gears 1b and 2b respectively.

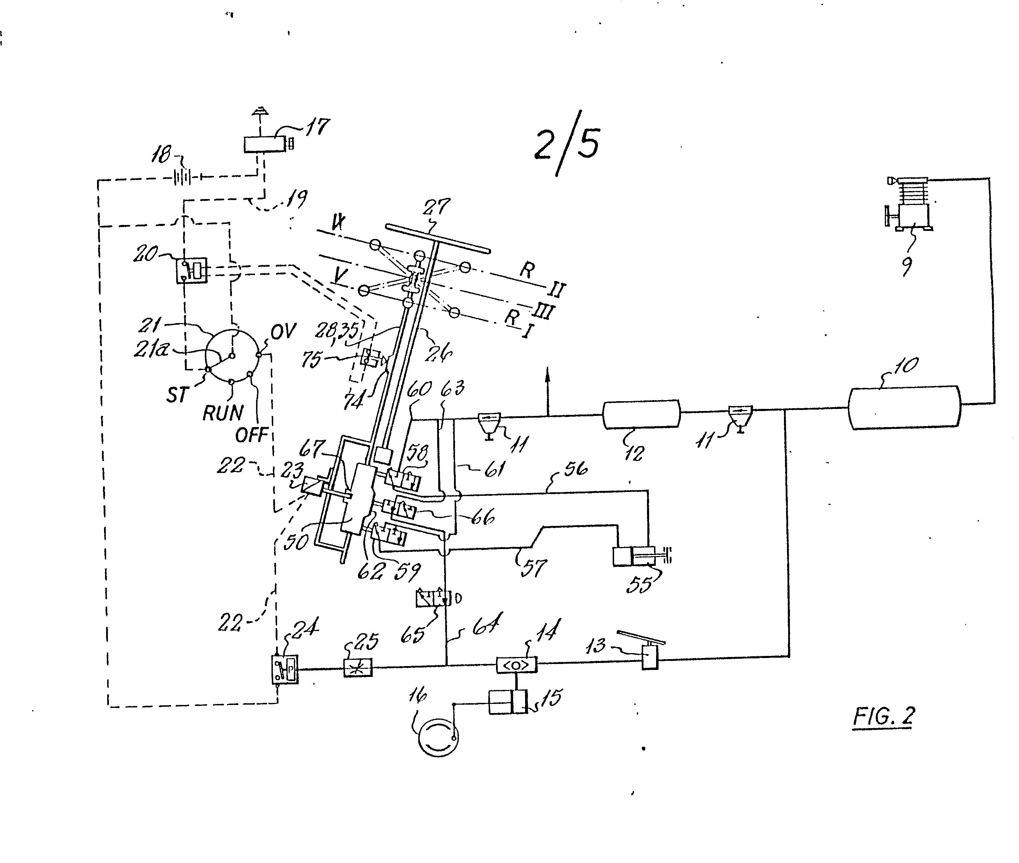

Referring now to Figure 2, the vehicle includes a pneumatically operated braking system in which the wheel brakes, only one of which is shown diagrammatically at 16, are each operated by a cylinder 15 under the control of a valve 13 via a two-way valve 14.

Air pressure for the braking system is provide by an engine driven compressor 9 which is connected with a storage tank 10. An additional air storage tank 12 is connected to a tank 10 via an overflow valve 11.

A battery 18 is connected with an ignition lock switch 21 having a movable contact indicated diagrammatically in Figure 2 at 21a. This contact is rotatable to occupy either an off-position designated "OFF" or a running position designated "RUN", or a start position designated "ST", or an overrider or detent release position designated "OV" The start position of ignition lock 21 is connected with a solenoid circuit of an engine starter 17 by line 19. Line 19 includes a switch relay 20 which is controlled by a safety switch 75 which cooperates with a cam 74 on a portion 40 of a transmission control lever 30 (see Figure 3). A solenoid 23 is connected with the override position of the ignition lock 21 via line 22. A further path for the energization of solenoid 23 is provided by line 22 which includes a brake pressure sensing switch 24. Switch 24 is connected with two way valve 14 via an air line which includes an adjustable throttle 25. Solenoid 23 operates a transmission locking bolt 68 as will be described below.

The electrical circuitry associated with the running position of the ignition lock is not shown since this is of conventional form and forms no part of the present invention.

A shift column 28 is provided immediately adjacent steering column 26, a steering wheel 27 being supported on column 26. Shift column 28 terminates at its upper end in a housing 29 which encloses the transmission control lever 30. The shift column 28 and associated control lever 30 are supported from the steering column 26 by an upper support 34 and a lower support 32 and associated clip 33.

Portion 40 of the control lever 30 is pivoted by pin 41 between plates 43 supported on a short flanged sleeve 42 at the upper end of column 28. As will be described further below, the sleeve 42 is rotatable in a bore 34a in the upper support 34.

Column 28 includes·an inner tube 44 which is secured at its upper end to sleeve 42 for rotation therewith and is supported towards its lower end by a bush 45 within a bore 32a in the lower support 32.

A lever 47, which is used to select either the forward, neutral or reverse condition in the hydraulic transmission, is mounted on tube 44 using a clamp 46 at a location above bush 45.

An outer tube 51 surrounds tube 44 and is supported at its upper end for rotation in bore 34a. A bush 48 supports the lower end of the tube 51 from tube 44 and a lever 54 for the control of auxilliary apparatus, such as for example stabilizers when the vehicle is a wheeled excavator, is secured to tube 51 for rotation therewith.

A rod 35 which is used to select the operative ratio of the gearbox 3 is longitudinally shiftable within tube 44. The upper end of rod 35 is connected with portion 40 of control lever 30 by a cross shaft 37 which extends through an eye 36 at the upper end of the rod 35 and corresponding appertures 40a in portion 40.

The central portion of cross shaft 37 is vertically displaceable in arcuate slots 11 in plates 43, the centre of curvature of slots 71 being coincident with the pivot axis of pin 41. The ends 38 and 39 of shaft 37 are constrained within H-shaped slots 72, 70 in stationary plates 53 and 69 secured to the upper support 34.

As can be seen from Figure 3, the H-shaped slots 70 and 72 each have a vertically extending portion which corresponds with the arcuate slots 71 and upper and lower horizontally extending portions.

From the above description it will be evident that the control lever 30 can be pivotted up and down about a generally horizontal axis provided by pin 41 and that this causes the shaft 37 to move up and down the arcuate slots 71 and the vertically extending portions of the H-shaped slots 70 and 72. This causes longitudinal shifting of rod 35 to control the gearbox 3.

Referring to Figures 2 and 3 the rod 35 is arranged, when the shaft 37 is in the I position, to select the cross-country ratio, when in the II position the road ratio, and when in the III position a neutral or no drive condition. The precise manner in which the movement of rod 35 is used to effect the ratio changes in gearbox 3 will be described in more detail below.

In addition to pivotting about a generally horizontal axis, lever 30 can also be rotated about a generally vertical axis when the shaft 37 is lying within either the upper or lower generally horizontally extending portions of H-shaped slots 70 and 72. This rotation about a generally vertical axis causes rotation of tube 44 and hence lever 47 as a result of the contact of shaft 37 with the slots 71 in plates 43. For example, a clockwise rotation of lever 30 when viewed from above from its vertically extending datum plane shown in full lines in Figure 5 causes the ends 38 and 39 of shaft 37 to move to the left hand end of the appropriate horizontally extending portion of slots 72 and 70 to place the hydraulic transmission in a forward drive condition, this selection of a forward drive condition by clockwise rotation of lever 30 from its datum position is indicated by the reference letters "V" in Figures 2 and 3. Conversely an anti-clockwise rotation of lever 30 from its datum plane causes the ends 38 and 39 of shaft 57 to move to the righthand end of the appropriate horizontally extending poriton of slots 72 and 70 to place the hydraulic transmission in a reverse drive condition. This is indicated by the reference letters "R" in Figures 2 and 3.

In order to put the vehicle in motion, after the lever 30 has been pivotted in a vertical plane to select the desired operating ratio in gearbox 3, the lever 30 is rotated from the datum plane in either a clockwise or anti-clockwise sense depending on the desired operating direction to progressively bring the hydraulic transmission into operation thus increasing the vehicles speed in the selected direction.

The actual selection of the operative ratio in gearbox 3 is achieved pneumatically using a three position cylinder 55 (Figure 2) which is connected by pipes 56 and 57 with actuating valves 58 and 59. Valves 58 and 59 are in turn connected by pipes 60 and 61 with the air pressure supply.

Valves 58 and 59 are actuated by a portion 62a of a cam 62 formed on a block 50 which is pinned to the lower end of rod 35 by a pin 35a which extends through slots 49 in tube 44. Thus as the control lever 30 is pivoted up or down to select either the road or cross-country ratio the block 50 is also shifted vertically thus causing the cam 62 to actuate either valve 58 or 59 to pressurize one or the other side of the piston in cylinder 50 thereby selecting the required ratio in gearbox 3.

As can be seen from Figure 2 a further actuating valve 66 is positioned between valves 58 and 59 but is displaced at 90° thereto, and is connected with the source of pressurized air via pipe 63. Valve 66 is connected with the braking circuit via pipe 64 which includes a venting valve 65 which is normally closed but which can be opened to vent the system. Valve 66 is actuated by a portion 62b of cam 62 (although a separate cam could be used) in such a manner that when control lever 30 is in the neutral position (shown in Figure 2) valve 66 connects the braking system with the pressure source to apply the brakes.

The block 50 also includes the detent 67 which co-operates with locking bolt 68 which can be retracted out of engagement with detent 67 by solenoid 23 against the action of spring 23a. As will be appreciated from the circuit diagram solenoid 23 is energized when pressure switch 24 is closed, indicating that the vehicle brakes are applied or when the ignition lock 21 is in the override position.

The transmission control and braking system operates as follows.

With the lever 30 in its neutral position as shown in Figure 3 the cam 74 closes safety switch 75. This closes relay 20 so that the ignition lock is operable, when the key is turned to its start position, to activate the starter 17. As can be seen from Figure 3 if shaft 37 is in the I or II position, switch 75 is not closed by cam 74 and also Figure 5 shows that if the lever 30 is rotated from its datum plane (shown in full lines) again the switch 75 will not be closed by cam 74. Thus the engine 4 can only be started when the lever 30 is in its neutral position.

Bolt 68 is arranged to engage detent 67 under the action of spring 23a until brake pressure sensing switch 24 senses that the lever of pressure in the braking and transmission ratio selection system has attained some predetermined level of say 6 bar at which the brakes are fully applied and the ratio changes can be made. When the switch senses that the system pressure has reached this predetermined level switch 24 closes thus energizing solenoid 23 and retracting bolt 68 out of engagement with detent 67 thus allowing the control lever to be moved to either the I or II position. Thus a drive condition cannot be selected in the transmission unless the brakes are applied.

Also, as described above valve 66, which is controlled by cam 62 ensures that whenever control lever 30 is in its neutral position the brakes are automatically applied.

Thus assuming that the gear lever 30 is in neutral, the engine has been started, and the brake pressure has risen to 6 bar to apply the brakes, the bolt 68 will have disengaged detent 67 and the vehicle operator will then be able to select a drive condition using control lever 30.

Assuming that the operator wishes to select the cross-country ratio in gearbox 3 and the forward drive direction, the operator pivots the lever 30 upwardly about pin 41 until the ends 38 and 39 of shaft 37 enter the lower generally horizontally extending portions of slots 72 and 70. This downwardly displaced rod 35 activating valve 59 via cam 62 to engage the cross country ratio as described above and to release the brakes via valve 66 allowing bolt 68 to engage recess 67a above detent 67 to hold the gearbox 3 in the cross-country ratio. Similarly when the road ratio is selected the bolt 68 engages recess 67b below detent 67. The lever 30 is then rotated in a clockwise sense to cause the end 38 of the shaft to move to the left hand end of the lower generally horizontally extending portion of the slot 72 denoted "V" in Figure 3 and the other end 39 to move to the right hand end of the lower generally horizontally extending portion of slot 70. This rotates lever 47 as described above and selects the forward drive direction in the hydraulic transmission.

Changing from the cross-country ratio to the road ratio can be effected by rotating and pivoting lever 30 to its neutral III position. This will automatically apply the brakes. The lever 30 can then be moved from the neutral position to the road ratio position II which releases the brakes via valve 66, engages the bolt 68 in recess 67b, and engages the road ratio via valve 58.

The lever 30 is then rotated from its datum plane to select either the forward or reverse drive direction as required and the desired vehicle speed.

It it is necessary to attempt to start the engine after it has been stopped with the gearbox 3 in either the road or cross-country ratio it is necessary to first move the ignition key to the detent release or override position in order to activate solenoid via line 22, 23 to retract bolt 68 out of engagement with either recess 67a or 67b thus allowing the lever 30 to be moved to its neutral position.

As will be understood without this detent release provision it would not be possible to engage neutral and hence start the engine.

As an alternative to providing the ignition lock 21 with an override or detent release position a separate electrical circuit (not shown) can be provided which can energize solenoid 23 to allow the transmission to be placed in neutral should it be necessary to start the engine after it has been stopped in gear. This separate electrical circuit will be arranged to be energized by a separate emercency switch.

1

Claims:

1.    A vehicle having a prime mover (4), ground engaging means by which said vehicle can be moved over the ground, a transmission (3, 5, 6, 7, 8) connecting said prime mover to said ground engaging means, transmission control means (30) movable from a no-drive position (III) to a number of drive positions (VI, VII, RI, RII), a braking system (9, 10, 11, 12, 13, 14, 15, 16, 63, 64, 66) for braking said ground engaging means, said vehicle being characterized by the combination of a prime mover starting circuit (17, 18, 19, 20, 21, 21a) including a prime mover starting means (17) and switch means (21) which must be moved to a start position (ST) when it is desired to energize said starting means and which occupies a running position (RUN) when said prime mover is running following starting, and an interlock system (74, 75, 67, 68, 62, 66, 23, 24) connecting both said starting circuit and said braking system to said control means to ensure that:-
    i)   with said switch means in said start position said starting circuit is only operative to energize said starting means when said control means is in said no-drive position, and
    ii)  with said switch means in said start or said running position said control means cannot be moved from said no-drive position to any one of said drive positions until said braking system is operative to brake said ground engaging means.

2.    A vehicle according to claim 1 characterized in that a further circuit (22) is provided to partially override said interlock system (74, 75, 67, 68, 62, 66, 23, 24) to enable said control means (30) to be moved from any one of said drive positions (VI, VII, RI, RII) to said no-drive position (III) when said prime mover (4) is not operative.

3.     A vehicle according to claim 2 characterized in that said further circuit (22) includes an override position (OV) of said switch means (21), said further circuit being arranged to be brought into operation to partially override said interlock system (74, 75, 67, 68, 62, 66, 24) when said switch means is in said override position.

4.     A vehicle according to any one of claims 1 to 3 characterized in that the braking system (9, 10, 11, 12, 13, 14, 15, 16, 63, 64, 66) is a fluid pressure power operated system and the interlock system (74, 75, 67, 68, 62, 66, 23, 24) includes a braking system pressure level sensing means (24) which ensures that with said switch means (21) in said start (ST) or said running (RUN) position the control means (30) cannot be moved from said no-drive position (III) to any one of said drive positions (VI, VII, RI, RII) until said braking system pressure has reached a predetermined level at which said braking system is operative to brake said ground engaging means.

5.     A vehicle according to any one of claims 1 to 4 characterized in that said interlock system (74, 75, 67, 68, 66, 23, 24) is arranged to ensure that the braking system is activated to brake said ground engaging means whenever said transmission control means (30) is in said no-drive position (III) and is de-activated whenever said control member is moved to any one of said drive positions (VI, VII, RI, RII).

6.     A vehicle according to any one of claims 1 to 5 characterized in that said transmission comprises a mechanical transmission element (3) having a number of selectively engageable ratios (I, II) and a hydraulic transmission element (5, 6, 7, 8) in series with said mechanical transmission element, both said elements being controlled by a single control means in the form of a lever (30) movable in two planes at right angles, movement in one plane (I II, III)

3

controlling the mechanical transmission element and movement in the other plane (V, R) controlling the hydraulic transmission element.

7.      A vehicle according to claim 6 characterized in that the single control lever (30) is connected with the mechanical transmission element (3) by a linkage (37, 35) which is associated with a locking member (50) having a neutral detent (67) engageable by a locking member (68), said locking member being disengaged from said detent when said braking system (9, 10, 11, 12, 13, 14, 15, 16, 63, 64, 66) is operative.

8.      A vehicle according to claim 7 characterized in that said locking member (50) includes a ratio detent (67a, 67b) for each ratio (I, II) of the mechanical transmission element (3), each ratio detent being engageable by said locking element (68) to hold the linkage (35, 37) and thus the mechanical transmission element in each selected ratio.

9.      A vehicle according to claim 7 or 8 characterized in that the ratios (I, II) of the mechanical transmission element (3) are engaged by a fluid pressure operated means (55), engagement of each ratio being under the control of valve means (58, 59) actuated by first cam means (62a) moved by said linkage (35, 37).

10.      A vehicle according to any one of claims 7 to 9 characterized in that second cam means (62b) moved by said linkage is provided for the operation of and de-activation of said braking system (63, 64, 66, 14, 15, 16) is response to the movement of said single control lever (30) to and from said no-drive position (III).

11.      A vehicle according to claim 10 characterized in that said braking system can be brought into operation by a pedal

4

(III) to brake said ground engaging means during motion of the vehicle said braking system being automatically brought into operation by said second cam means (62b) on selection of said no-drive position (III).

12.    A vehicle according to claims 9 and 10 characterized in that said first (62a) and second (62b) cam means are provided on said locking member (50).

FIG.1

FIG. 2

FIG.3

FIG.4

FIG.5

FIG.6

0010380

Application number

European Patent Office
**EUROPEAN SEARCH REPORT**

EP 79 302 105.6

| | **DOCUMENTS CONSIDERED TO·BE RELEVANT** | | CLASSIFICATION OF THE APPLICATION (Int. Cl.3) |
|---|---|---|---|
| Category | Citation of document with indication, where appropriate, of relevant passages | Relevant to claim | |
| | US – A – 3 998 111 (BLAKE) <br> * abstract; fig. * <br> -- | 1 | B 60 K 28/00 <br> B 60 K 41/26 |
| | US – A – 3 633 700 (MATTHEWS et al.) <br> * claim 1; fig. 2 * <br> -- | 1,6 | |
| | US – A – 3 858 696 (SHORE) <br> * abstract; fig. 5 * <br> -- | 1 | TECHNICAL FIELDS SEARCHED (Int.Cl.3) |
| | DE – A – 2 426 319 (NISSAN) <br> * claim 1; fig. 1 * <br> -- | 1 | B 60 K 28/00 <br> B 60 K 41/00 |
| | DE – A – 1 927 244 (MÜLLER METALL-WARENFABRIK) <br> * claim 1; page 6, lines 4 to 11 * <br> -- | 4 | B 60 T 17/00 <br> F 02 N 15/00 |
| A | DE – U – 6 601 601 (SAARBERGTECHNIK) <br> * claims; fig. * <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family,
corresponding document

The present search report has been drawn up for all claims

| Place of search | Date of completion of the search | Examiner |
|---|---|---|
| Berlin | 11-01-1980 | LEITZ |

EPO Form 1503.1  06.78